Europäisches Patentamt

European Patent Office

Office européen des brevets

(11) Veröffentlichungsnummer: **0 320 679**
**A2**

(12) **EUROPÄISCHE PATENTANMELDUNG**

(21) Anmeldenummer: **88119692.7**

(22) Anmeldetag: **25.11.88**

(51) Int. Cl.⁴: **A47J 31/00**

(30) Priorität: **15.12.87 DE 3742507**

(43) Veröffentlichungstag der Anmeldung:
**21.06.89 Patentblatt 89/25**

(84) Benannte Vertragsstaaten:
**AT BE CH DE ES FR GB GR IT LI LU NL SE**

(71) Anmelder: **Hirsch, Paul**
**Karl-Theodor-Strasse 91**
**D-8000 München 40(DE)**

(72) Erfinder: **Hirsch, Paul**
**Karl-Theodor-Strasse 91**
**D-8000 München 40(DE)**

(74) Vertreter: **Koch, Günther, Dipl.-Ing. et al**
**Kaufingerstrasse 8 Postfach 920**
**D-8000 München 2(DE)**

(54) **Verfahren und Gerät zum Zubereiten von gefiltertem Kaffee.**

(57) Zur Zubereitung von Filterkaffee in einem Mikrowellenherd wird kaltes Wasser mit Kaffeemehl und gegebenenfalls weiteren Zusätzen vermischt, das Gemisch wird durch Mikrowellenstrahlung erwärmt und es wird weiterhin durch Mikrowellenstrahlung über ein Filter hinweg eine Druckdifferenz aufgebaut, die dann, wenn das Gemisch warm ist, dieses durch das Filter hindurchdrückt oder - saugt.

Die erfindungsgemäßen Geräte bestehen aus einer Kanne und einem lose auf diese aufgesetzten, geschlossenen Gemischbehälter oder aus einer Kanne und einem dichtend auf diese aufgesetzten, offenen Gemischbehälter.

Fig. 2

EP 0 320 679 A2

## Verfahren und Gerät zum Zubereiten von gefiltertem Kaffee

Die Erfindung betrifft ein Verfahren zum Zubereiten von gefiltertem Kaffee, gemäß dem Oberbegriff des Anspruchs 1, sowie ein Gerät zur Durchführung des Verfahrens gemäß Anspruch 8 oder ein Gerät gemäß Anspruch 13.

In einer herkömmlichen Kaffeemaschine ist eine Kaffeekanne angeordnet, auf welche ein Behälter aufgesetzt ist, der an seiner Oberseite im wesentlichen offen ist und an seiner Unterseite durch ein Filterpapier verschlossen ist, auf welches das auszulaugende und abzufilternde Kaffeepulver geschüttet wird. In einer einem Durchlauferhitzer ähnlicher Heizeinrichtung wird kaltes Wasser mit geringem Durchsatz erhitzt und tropft auf den gemahlenen Kaffee, sickert durch diesen hindurch und tropft schließlich in die Kaffeekanne ab.

Diese Verfahren ist sehr zeitraubend und auch wenig ergiebig, denn das auf den Kaffee heruntertropfende Wasser kühlt hierbei wieder ab, so daß das Kaffeepulver nicht ausreichend ausgelaugt werden kann.

Es ist ferner von Espressomaschinen her bekannt, heißes Wasser oder Dampf mit hohem Druck durch eine Lage Kaffeepulver hindurchzupressen, die zwischen zwei Siebflächen eingeschlossen ist, aber dieses bekannte Gerät ist für den Haushaltsbetrieb zu aufwendig und wegen des hohen, verwendeten Innendrucks auch zu gefährlich. Außerdem ist es auch mit diesem Gerät nur dann möglich, rasch Filterkaffee zuzubereiten, wenn bereits heißes Wasser oder Dampf zur Verfügung steht.

Es wurde bereits eine Kaffeemaschine vorgeschlagen (DE-OS 28 29 567), bei welcher zum Erwärmen des Wassers Mikrowellen herangezogen werden, mittels deren das Wasser rascher erwärmt werden kann, als dies mit einer gleich leistungsfähigen sonstigen elektri schen Heizquelle der Fall ist. Zu diesem Zweck ist oberhalb des zur Aufnahme von gemahlenem Kaffee eingerichteten Filters ein Behälter für kaltes Wasser vorgesehen, der für Mikrowellen durchlässig ist und der mit dem Filter durch ein Thermostatventil in Verbindung steht. Bei der Benutzung wird das gesamte Gerät in einem Mikrowellenherd gesetzt, welcher das Wasser rasch zum Kochen bringt. Durch die Siedetemperatur wird das Thermostatventil geöffnet, und das kochende Wasser gelangt in den mit Kaffee gefüllten Filter, durch den es hindurchtropft.

Auch hier ist die Zeitdauer zur Zubereitung von Filterkaffee nur unwesentlich gegenüber dem eingangs genannten, bekannten Verfahren verkürzt. Zusätzlich muß aber Vorsorge getroffen werden, daß der gemahlene Filterkaffee sorgfältig vor den Mikrowellenstrahlen abgeschirmt wird, da gemahlener Kaffee, wie Versuche ergeben haben, nach nur sehr kurzer Zeit der Mikrowelleneinstrahlung, also lange, bevor das Wasser zum Aufgießen des Kaffees kocht, in Brand gerät.

Bei allen jenen Geräten, bei denen Kaffee durch ein Papierfilter abgefiltert wird, hat sich herausgestellt, daß Mokka, also fein gemahlener, mit kaltem Wasser und Zucker zugesetzter und gemeinsam hiermit aufgekochter Kaffee sich nur sehr langsam abfiltern läßt.

Es wurde ein weiteres Gerät vorgeschlagen (DE-OS 32 06 803), das im wesentlichen einer herkömmlichen Espressomaschine ähnelt und aufeinandersitzend eine Kaffeekanne, ein durch zwei Siebflächen abgeschlossenes Filter zur Aufnahme von Kaffee und einen Wasserbehälter aufweist. Dieser Wasserbehälter ist für Mikrowellenstrahlung durchlässig, und das Filter ist ausdrücklich so eingerichtet, daß unter atmosphärischem Druck oder Umgebungsdruck im wesentlichen keine Flüssigkeit durch das Filter hindurchgelangen kann.

Das bekannte wird in einen Mikrowellenherd gestellt, wo die Mikrowellenstrahlung das Wasser im Wasserbehälter zum Kochen bringt, während gleichzeitig der Kaffee abgeschirmt bleibt. Durch die Dampfbildung baut sich dann im Wasserbehälter ein so hoher Druck auf (bis zu 3,45 bar), daß das Wasser mit diesem überdruck durch das Filter hindurchgepreßt wird.

Die Verwendung von Papierfiltern ist bei einem solchen Gerät nicht möglich, da es in Abhängigkeit von der Art des jeweils verwendeten Filterpapiers zu unkontrollierten Druckerhöhungen im Wasserbehälter kommen kann.

Ausgehend von diesem Stand der Technik liegt der Erfindung die Aufgabe zugrunde, das aus der letztgenannten Druckschrift bekannte Verfahren und Gerät dahingehend weiterzubilden, daß auf möglichst rasche und ergiebige Weise die Zubereitung von Filterkaffee, gefiltertem Mokka und dergleichen möglich ist, ohne daß gefährlich hohe Drücke innerhalb des Geräts hingenommen werden müssen. Außerdem soll die Verwendung von Filterpapier möglich sein.

Diese Aufgabe wird durch die Merkmale des Anspruchs 1 sowie der Ansprüche 8 und 13 gelöst.

Das erfindungsgemäße Verfahren unterscheidet sich von dem gattungsbildenden, durch die DE-OS 32 06 803 bekannten Verfahren durch drei Schritte:
- der gemahlene Kaffee wird nicht in ein abgeschlossenes Filter gegeben, wo er vor dem Zutritt von Mikrowellen abgeschirmt ist, sondern wird, gegebenenfalls mit Zucker - Zichorie, Zimt oder sonstigen Zusätzen mit jener Menge kalten Wassers vermischt, die im wesentlichen für die Zubereitung des Kaffees erforderlich ist.

- Dieses Gemisch wird dann den Mikrowellen ausgesetzt, wobei auch die einzelnen Partikel des Kaffees infolge ihres Öl- und Fettgehaltes von den Mikrowellen erwärmt werden, so daß die in den Partikeln enthaltenen Aromastoffe aufgeschlossen und an das umgebende Wasser abgegeben werden können. Hierdruck erklärt sich die besondere Ergiebigkeit des erfindungsgemäßen Verfahrens.

- Der Strömungswiderstand des Filters wird auf einen ähnlichen Wert eingestellt wie bei der eingangs genannten, herkömmlichen elektrischen Kaffeemaschine, bei welcher der Kaffee aufgrund seines statischen Drucks abgefiltert wird. Gleichzeitig wird ein nur so geringes Druckgefälle über den Filter hinweg zugelassen, daß keinerlei Explosionsgefahr gegeben ist, wie sie bei dem bekannten, gattungsbildendne Gerät etwa dann auftreten könnte, wenn dieses Gerät in einem Mikrowellenherd mit zu hoher Leistung gesetzt wird.

Das geringe Druckgefälle dient lediglich dazu, den Filtervorgang zu beschleunigen.

Der Filtervorgang setzt aber bereits früher ein, so daß das Gemisch dann, wenn es beginnt, aufzuwallen, bereits gleichzeitig abgefiltert wird. Ein Druckaufbau wie bei dem bekannten, gattungsbildenden Gerät ist nicht erforderlich. Gleichzeitig wird während des Aufwallens des Gemisches durch Konvektionsströmungen in diesem der gemahlene kaffee hochgewirbelt, so daß er sich nicht auf der Siebfläche bzw. dem Filterpapier absetzt und dessen Poren zusetzt. Aus diesem Grund kann durch das erfindungsgemäße Verfahren auch ohne weiteres Mokka hergestellt werden, der vollständig und rasch abgefiltert wird, was bisher noch nicht möglich war.

Beim erfindungsgemäßen Verfahren wird bereits vom kalten Gemisch ein Filtrat hergestellt, wenn auch nur in geringer Menge. Um dies auf ein Mindestmaß zu reduzieren, wird gemäß bevorzugter Ausgestaltungen der Erfindung vorgeschlagen, daß zum Ausgleich des statischen Drucks des Gemischs stromaufwärts vom Filter ein geringer Unterdruck oder stromabwärts vom Filter ein geringer Überdruck hergestellt wird, so daß selbst dann, wenn das erfindungsgemäße Gerät bereits gefüllt ist und längere Zeit bis zur Mikrowellenbeaufschlagung verstreichen sollte, nicht mittlerweile das gesamte Gemisch kalt abgefiltert wird.

Zum Ausgleich dieses statischen Unterdrucks kann der Behälter zur Aufnahme des Gemischs ähnlich dem Wasserbehälter der gattungsbildenden Druckschrift ausgebildet sein, also als ein Behälter, dessen einzige Öffnung durch das Filter verschlossen wird. Wird dieser Behälter mit dem Gemisch gefüllt und dann zum Aufsetzen auf die Kaffeekanne so umgedreht, daß das Filter nach unten weist, dann tritt nur eine geringe Menge an Filtrat aus, da sich sehr bald im Inneren des Behälters ein Unterdruck einstellt, der dem statischen Druck entgegenwirkt.

Es ist aber auch möglich, das Gemisch in einen ähnlich ausgebildeten Behälter einzufüllen, der jedoch an der Oberseite offen ist, und diesen Behälter dann dichtend in der einzigen Öffnung einer Kaffeekanne anzuordnen. In diesem Fall bildet sich innerhalb der Kaffeekanne sehr rasch ein geringer Überdruck, der das weitere Abtropfen des Gemisches durch das Filter verhindert.

Im letztgenannten Fall ist die Kaffeekanne selbst aus einem für Mikrowellen mindestens teilweise durchlässigen Material gebildet. Vor Aufsetzen des Filters wird eine geringe Wassermenge in die Kaffeekanne gegeben, die geringer ist als die für das Gemisch verwendete Wassermenge. Somit wird zunächst das Wasser in der Kaffeekanne kochen und weitgehend verdampfen. Gleichzeitig wird das Gemisch bis zum gewünschten Grad erhitzt, wonach die Mikrowellenbeaufschlagung aufgebrochen wird. Hierbei kühlt der in der Kaffeekanne enthaltene Dampf rasch ab, wodurch ein Vakuum entsteht, das den Kaffee durch das Filter hindurch in die Kaffeekanne saugt.

Nach erfolgtem Abfiltern und Herstellen des Druckausgleichs kann der Behälter ohne weiteres von der Kaffeekanne abgenommen werden.

Soweit ein Behälter verwendet wird, in dessen Innerem sich ein Überdruck einstellt, ist das Filter bevorzugt als Behälter-Sicherheitsverschluß ausgebildet, der sich dann löst, wenn der Innendruck im Behälter einen gewissen Wert überschritten hat.

Wenn z.B. ein solches Gerät für einen Mikrowellenherd mit kleiner Leistung ausgelegt ist, aber in einen solchen mit großer Leistung eingesetzt wird, so daß die Druckentwicklung im geschlossenen Behälter ungebührlich zunimmt, dann findet durch Abdrücken des Filtereinsatzes nach unten in die Kaffeekanne ein Druckausgleich statt, ohne daß irgendwelche Teile des Mikrowellenherds verschmutzt werden.

Zur Anpassung des erfindungsgemäßen Geräts an die Leistung der auf dieses Gerät auftreffenden Mikrowellenstrahlung ist es auch möglich, den geschlossenen Behälter mit einer kleinen Blende zu versehen, welche der Druckabsenkung dient, und/oder Behälter und/oder Kaffeekanne mindestens partiell vor Mikrowellen abzuschirmen, etwa durch Aufbringen einer metallischen Beschichtung.

Das erfindungsgemäße Gerät, bei welchem in dem Gefäß für das Filtrat bzw. in der Kaffeekanne durch Wasserdampf ein Unterdruck erzeugt wird, läßt sich auch auf eine andere als die beschriebene Weise benutzen: so ist es zum Beispiel möglich, in den Behälter für das Filtrat reines Wasser einzufüllen und das Gerät bis zum Sieden dieses Wassers in einen Mikrowellenofen zu geben. Hierbei muß, wie oben beschrieben, eine geringe Menge Wassers in das Filtratgefäß bzw. die Kaffeekanne gegeben werden; diese Menge ist so auf jene im Gemischbehälter abgestimmt, daß das Wasser im Filtratbehälter bereits in einer ausreichenden Mengen Verdampft ist, bevor das Wasser im Gemischbehälter zu sieden beginnt. Zu diesem Zeit punkt darf der Dampf allerdings noch nicht oder nur wenig abgekühlt sein.

Nun wird das Gerät aus dem Mikrowellenofen genommen und der Kaffe oder dergl. wird in das nahezu siedende Wasser im Gemischbehälter gegeben. Wenn der Dampf ausreichend abegekült ist, was von dem Volumen und der Wärmeisolierung des Filtratgefäßes sowie von der Umgebungstemperatur abhängt, sinkt der Druck in diesem Gefäß rapide ab und saugt den mittlerweile im Gemischbehälter gebildeten Aufguß durch das Filter.

Als Filter hat sich eine Siebfläche bewährt, die von einem herkömmlichen Filterpapier für den einmaligen Gebrauch abgedeckt wird. Besonders vorteilhaft ist jedoch auch ein Dauerfilter, und zwar bevorzugt ein Filter aus sogenanntem Glasschaum (im Ofen zusammengeschmolzene Glaspartikel), das die gleichen Abmessungen wie das Filterpapier aufweisen kann und wahlweise anstelle dessen verwendet werden kann.

Das Sauggefäß muß ein ausreichendes Volumen aufweisen, um für das vollständige Absaugen auch des letzten Restes an Filtrat durch das Filter noch einen ausreichenden Unterdruck aufzuweisen. Hierbei hat sich nach Versuchen mit Filterkaffee eine solche Gerätegröße als besonders zufriedenstellend herausgestellt, die zur Herstellung einer Portion (zwei Tassen) Kaffe eingerichtet ist.

Der Gegenstand der Erfindung wird anhand der beigefügten, schematischen Zeichnung beispielsweise näher erläutert.

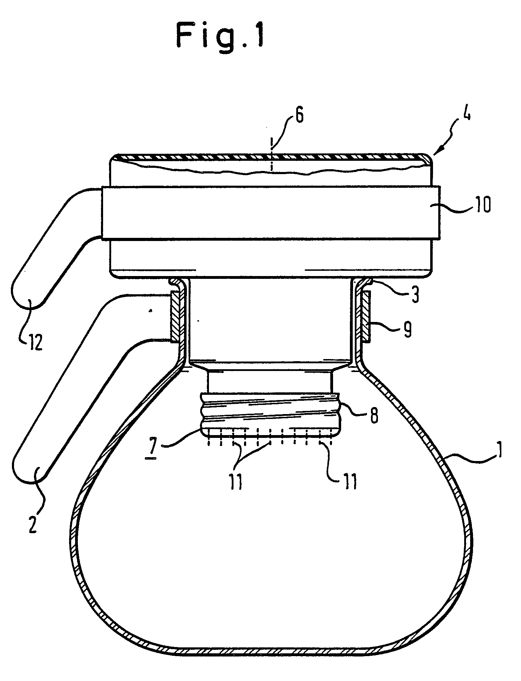

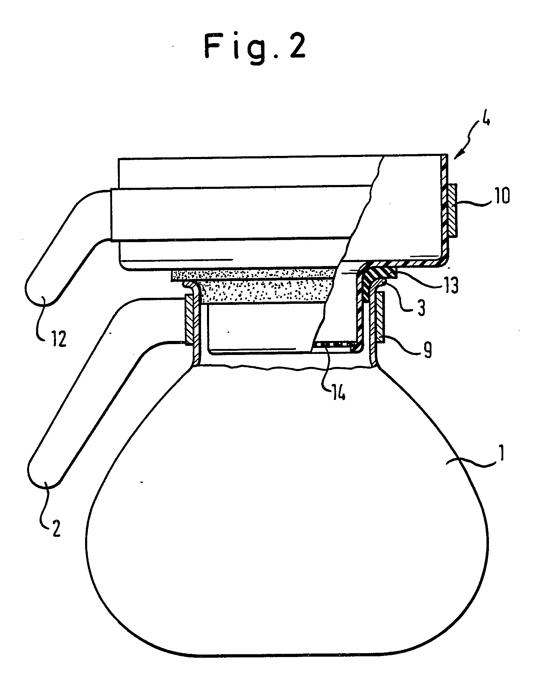

In dieser zeigen die Fig. 1 und 2 jeweils ein bevorzugtes Ausführungsbeispiel der Erfindung.

Gleiche Elemente bei den beiden Ausführungsbeispielen sind mit den gleichen Bezugszeichen versehen und werden nachfolgenden nur einmal beschrieben.

Das jeweils in Fig. 1 und 2 gezeigte Gerät ist aus einer Kaffee kanne 1 gebildet, die bevorzugt aus Glas gebildet ist, aber auch aus einem ähnlichen, temperaturbeständigen und für Mikrowellen durchlässigen Material gebildet sein kann, wie z.B. keramischem Material oder Kunststoff.

Im Fall der Ausführungsform der Fig. 1 kann das Material der Kaffeekanne 1 Zusätze enthalten, die seine Erwärmung unter Mikrowellenbeaufschlagung bewirken, um noch besser ein vorzeitiges Abkühlen des von der Kaffekanne 1 aufzunehmenden Filterkaffees zu vermeiden.

Die Kaffeekanne 1 weist einen Hals auf, der in einem ebenen, flanschartig nach außen gewölbten Rand endet. Der Hals wird von einem Ring 9 umspannt, an dem ein Handgriff 2 befestigt ist. Dieser Ring 9 kann aus noch weiter unten erläuterten Gründen aus Metall gebildet sein.

Im Hals der Kaffeekanne 1 sitzt ein Gemischbehälter 4, der im Falle der Ausführungsform der Fig. 1 die Form einer geschlossenen Dose aufweist, die einen nach unten überstehenden Hals aufweist, der seinerseits durch einen gelochten Verschlußdeckel 7 verschlossen ist.

Der Körper des dosenartigen Gemischbehälters 4 sitzt auf dem Rand 3 lose auf und ist von einem Ring 10 umspannt, der einen Handgriff 12 trägt.

Der gelochte Verschlußdeckel 7 weist Löcher 11 auf, die in der Zeichnung nur schematisch dargestellt sind und die an ihrer Innenseite durch ein eingelegtes Filterpapierblättchen abgedeckt sein können.

Der Verschlußdeckel 7 ist mittels eines Sicherheitsgewindes 8 auf den Hals des Gemischbehälters 4 aufgeschraubt; dieses Gewinde ist so dimensioniert, daß es dann, wenn im Gemischbehälter 4 ein ungebührlich hoher Druck entsteht, nachgibt, so daß dann der gelochte Verschlußdeckel 7 nach unten ausweichen kann.

Der Gemischbehälter 4 besteht bevorzugt aus einem mikrowellendurchlässigen, wärmebeständigen Kunststoff, z.B. einem Polycarbonat.

Bei der Zubereitung von Kaffee wird der Gemischbehälter 4 aus der Kaffeekanne 1 herausgehoben und umgedreht. Dann wird der Verschlußdeckel 7 ab geschraubt. In das Innere des Gemischbehälters 4 wird Kaffee und gegebenenfalls Zucker, Kakao, Zichorie oder Zimt gegeben und mit der geeigneten Menge Wasser aufgefüllt. Anschließend wird ein Blatt Filterpapier, das so bemessen ist, daß es genau die Löcher 11 des Verschlußdeckels 7 abdeckt, in dessen Höhlung eingelegt; anschließend wird der Verschlußdeckel auf den Gemischbehälter 4 aufgeschraubt. Anschließend wird der Verschlußbehälter 4 am Griff 12 ergriffen, gegebenenfalls kurz geschwenkt, um den Inhalt durchzumischen, und von oben her auf die Öffnung der Kaffeekanne 1 aufgestülpt.

Nun wird ein wenig kaltes Wasser aus dem Verschlußdeckel 7 austropfen, aber nur so viel, bis sich im Inneren des Gemischbehälters 7 ein solcher Unterdruck eingestellt hat, daß er dem statischen Druck, den das Gemisch auf das Filterpapier ausübt, entgegenwirkt.

Nun wird diese Anordnung in einen Mikrowellenofen geschoben, der auf eine geeignete und vorher bestimmte Betriebszeit programmiert wurde.

Während der Mikrowellenbeaufschlagung wird das Gemisch im Gemischbehälter 4 bis kurz unter den Siedepunkt erwärmt; sobald das Gemisch zu sieden beginnt, wird es durch den im Gemischbehälter 4 entstehenden Überdruck nach unten durch das Filterpapier gepreßt, wobei das Filtrat in die Kaffeekanne 1 tropft. Die weitere Beaufschlagung durch Mikrowellen sollte dann bald unterbunden werden, um zu verhindern, daß die auf dem Filterpapier verbleibenden Rückstände sowie das Filterpapier zu brennen beginnen.

Um dies zu verhindern oder die Möglichkeit zumindest zu verringern, und um gleichzeitig zu verhindern, daß das Filtrat seinerseits zum Sieden gebracht wird, kann die Kaffeekanne 1 aus einem für Mikrowellen undurchlässigen Material gebildet sein, das auch imstande ist, den unteren, das Filter aufnehmenden Teil des Gemischeinsatzes abzuschirmen.

Es können auch die Befestigungsbänder 9 und 10 zur Befestigung der Handgriffe 2 und 12 aus Metall ausgebildet sein und in ihrer Breite so bemessen sein, daß eine bestimmte, dosierte Abschirmung des im Behälter 4 enthaltenen Gemischs erreicht wird. Durch unterschiedliche Bemessung dieser Haltebänder 9 und 10 est es daher möglich, ein und dasselbe Gerät zur Verwendung in Mikrowellenherden mit unterschiedlicher Leistung einzurichten. Es können die Griffe aber auch angeklebt sein, und soweit eine Abschirmung erforderlich ist, kann diese durch Aufkleben einer Folie aus Metall oder durch Aufdampfen einer Metallschicht bewirkt werden.

Nach Entnahme des Geräts aus dem Mikrowellenherd wird der Behälter 4 mittels des Griffes 12 aus der Kanne herausgehoben.

Wie Versuche ergeben haben, ist für die Zubereitung von vier Tassen Filterkaffee eine Zeit von nur drei Minuten erforderlich.

Nach der Entnahme des Behälters 4 aus der Kanne 1 kann der Verschlußdeckel 7 abgeschraubt werden; die in ihm verbliebenen Rückstände sind völlig trocken und können einfach herausgeschüttelt werden. Das Filterpapier, das ebenfalls nahezu trocken ist, kann mehrfach verwendet werden.

Wie Vergleichsversuche ergeben haben, ist das durch das Gerät hergestellte Filtrat kräftiger im Geschmack als ein herkömmlicher, mit gleichen Mengen an Kaffee und Wasser hergestellter Filterkaffee.

Die Anordnung der Löcher 11 im Verschlußdeckel 7 ist nicht kritisch, da der Kaffee bereits während des Erhitzens des Gemischs ausgelaugt wird, nicht erst während des Abfilterns.

In Fig. 1 ist mit 6 schematisch eine Blendenöffnung gezeigt, durch welche während der Zubereitung von Kaffee Dampf entweichen kann, so daß der Innendruck im Behälter 4 abgesenkt wird.

Bei der praktischen Realisierung ist die Blendenöffnung 6 so angebracht, daß sie durch einen Finger der den Griff 12 haltenden Hand mühelos verschlossen werden kann, wenn der Behälter 4 mit Kaffee und dergleichen sowie Wasser gefüllt wird.

Während beim Ausführungsbeispiel der Fig. 1 ein geringer Überdruck im Behälter 4 hergestellt wird, wird bei einer Ausführungsform der Fig. 2 ein geringer Unterdruck in der Kaffeekanne 1 hergestellt.

Zu diesem Zweck ist die Kaffeekanne 1 aus einem Material hergestellt, das für Mikrowellen mindestens weitgehend durchlässig ist. Der Gemischbehälter 4 sitzt auf dem Rand 3 der Kaffeekanne 1 nicht, wie im Ausführungsbeispiel der Fig. 1, unmittelbar auf, sondern es ist eine flexible Dichtmanschette 3 an der halsartigen Ausstülpung des Gemischbehälters 4 angeordnet, welche z.B. aus Silikongummi oder einem sonstigen Material besteht, das durch Mikrowellen nicht beeinträchtigt werden kann.

Die Manschette 13 dichtet gegenüber dem Rand 3 und dem hals der Kaffeekanne 1 ab.

Der Gemischbehälter 4 ist an seiner Oberseite offen und kann dort etwa durch einen Deckel oder dergleichen abgedeckt sein, der jedoch so ausgebildet sein muß, daß er keinen luftdichten Verschluß herstellt.

Bei der Inbetriebnahme wird eine geringe Menge Wasser, z.B. etwa eine halbe Tasse, in die Kanne gegeben, dann wird der Gemischbehälter 4 dichtend auf die Kanne aufgesetzt. Der Boden des Gemischbehälters 4 ist durch eine Filterplatte 14 gebildet, auf die wiederum wie beim Ausführungsbeispiel der Fig. 1 bevorzugt ein Blatt Filterpapier aufgelegt werden kann. Anschließend wird die gewünschte Menge an Kaffee und dergleichen in den Gemischbehälter 4 gegeben, der anschließend mit der gewünschten Menge an Wasser aufgefüllt wird.

Diese gewünschte Wassermenge ist in jedem Falle wesentlich mehr als jene Wassermenge, die sich in der Kaffeekanne 1 befindet.

Hierbei wird eine geringe Menge des Wassers zusätzlich durch die Filterplatte 14 in die Kanne 1 nach unten abtropfen, bis in dieser ein Überdruck hergestellt ist, der den im Behälter 4 herrschenden statischen Druck des Gemischs ausgleicht.

Nun wird das Gerät in einen Mikrowellenherd gegeben und wird der Beaufschlagung durch Mikrowellen ausgesetzt. Hierbei wird zunächst die geringe Wassermenge in der Kaffeekanne 1 zu sieden beginnen, und anschließend wird das Gemisch im Gemischbehälter 4 bis kurz vor den Siedepunkt erhitzt. Nun wird die Mikrowellenbeaufschlagung eingestellt. Demzufolge kühlt der Dampf in der Kaffeekanne 1 rasch ab, da diese ihrerseits nicht erwärmt wurde, so daß sich im Inneren der Kaffeekanne 1 ein Unterdruck bildet, durch welchen das Gemisch im Behälter 4 durch die Filterplatte 14 nach unten abgesaugt wird. Nach Herstellung des Druckausgleichs läßt sich der Behälter 4 mittels des Handgriffs 12 mühelos vom Hals der Kaffeekanne 1 abnehmen.

Bei Verwendung einer besonders großen Kaffeekanne 1 ist es möglich, daß bereits diese Wassermenge zum Herstellen des Unterdrucks ausreicht, die beim Auffüllen des Gemischbehälters 4 nach unten in die Kanne 1 abtropft, bis der im Gemischbehälter 4 herrschende statische Druck des Gemischs ausgeglichen ist.

Die Ausführungsform der Fig. 2 weist die gleichen Vorzüge auf wie jene der Fig. 1, und zusätzlich noch jenen, daß keinerlei Überdruckraum vorgesehen ist.

Mit dem beschriebenen Gerät kann nicht nur Kaffee verarbeitet werden, sondern es können auch andere Aufgußstoffe, wie z.B. Ersatzkaffee, verwendet werden. Durch geeignete Dimensionierung einer Abschirmung des Gemischbehälters 4 und gegebenenfalls auch der Kanne 1 kann die Erwärmungszeit verlängert werden, falls dies z.B. bei der Zubereitung von Tee erforderlich sein sollte.

**Ansprüche**

1. Verfahren zum Zubereiten von gefiltertem Kaffee, Mokka oder dergleichen, wobei das .verwendete Wasser durch Mikrowellen erhitzt wird, durch Mikrowellen ein Druckgefälle über ein Filter hinweg hergestellt wird und das Wasser nach dem Auslaugen des gemahlenen Kafees oder dergleichen infolge des Druckgefälles zwangsweise durch das Filter hindurchtritt,
dadurch **gekennzeichnet,** daß zunächst ein Gemisch aus dem gemahlenen Kaffee oder dergleichen und dem kalten Wasser hergestellt und dann der Einwirkung der Mikrowellen ausgesetzt wird.

2. Verfahren nach Anspruch 1, dadurch gekennzeichnet, daß das Druckgefälle auf einen Wert eingestellt wird, der unter dem Absolutwert des Umgebungsdruckes liegt, und daß der Strömungswiderstand des Filters so eingestellt wird, daß das Wasser bereits aufgrund seines statischen Drucks durch das Filter abtropfen kann.

3. Verfahren nach einem der Ansprüche 1 oder 2, dadurch gekennzeichnet, daß das Gemisch vor dem Erwärmen einem Unterdruck ausgesetzt wird, der dem statischen Druck entgegenwirkt.

4. Verfahren nach einem der Ansprüche 1 oder 2, dadurch gekennzeichnet, daß daß stromabwärts vom Filter ein Überdruck hergestellt wird, der dem statischen Druck entgegenwirkt.

5. Verfahren nach Anspruch 3, dadurch gekennzeichnet, daß zum Herstellen des Druckgefälles das Gemisch in einen im wesentlichen nur mit einer Einfüllöffnung versehenen Behälter eingefüllt wird, und daß dieser Behälter dann so umgestürzt wird, daß sich ein die Flüssigkeitssäule tragender oder mittragender Unterdruck ergibt.

6. Verfahren nach einem der Ansprüche 1, 2 oder 4, dadurch gekennzeichnet, daß eine Menge Wassers, die bevorzugt kleiner ist als jene des Gemisches, in das Gefäß zur Aufnahme des Filtrats eingefüllt wird, daß das Gefäß dichtend vom Filter abgeschlossen wird, und daß das Gefäß und somit die in ihm enthaltene Menge Wassers zum Sieden gebracht wird, so daß der im Gefäß befindliche Dampf nach seiner Abkühlung einen Unterdruck bildet, der das Filtrat durch das Filter saugt.

7. Verfahren nach einem der Ansprüche 1 bis 6, dadurch gekennzeichnet, daß das Gemisch und/oder das Filtrat teilweise gegenüber dem Einfall von Mikrowellenstrahlung abgeschirmt wird.

8. Gerät zur Durchführung des Verfahrens nach mindestens einem der Ansprüche 1 bis 3, 5 und 7, mit einem nach außen offenen Gefäß für das Filtrat und einem auf dieses abnehmbar aufgesetzten, mindestens weitgehend geschlossenen Behälter, an dessen Unterseite das Filter angeordnet ist,
dadurch gekennzeichnet, daß das Filter (7) als einzige Siebfläche ausgebildet ist, deren Strömungswiderstand` auch mit Filterpapier so gering ist, daß Wasser hindurch abtropfen kann.

9. Gerät nach Anspruch 8, dadurch gekennzeichnet, daß das Filter (7) von einer mit Filterpapier oder dergleichen abgedeckten Siebfläche gebildet ist.

10. Gerät nach einem der Ansprüche 8 oder 9, dadurch gekennzeichnet, daß der Behälter (4) für das Gemisch mit Ausnahme der vom Filter abgedeckten Einfüllöffnung völlig geschlossen ist.

11. Gerät nach einem der Ansprüche 8 oder 9, durch gekennzeichnet, daß der Behälter (4) für das Gemisch an einer dem Filter (7) gegenüberliegenden Wandseite eine Blendenöffnung (6) aufweist.

12. Gerät nach einem der Ansprüche 9 bis 11, dadurch gekennzeichnet, daß die Siebfläche bzw. das Filter (7) nach Überwinden einer solchen Kraft vom Behälter (4) für das Gemisch nach außen abziehbar ist, welche jene Kraft gerade übersteigt, die der noch zulässige Behälter-Innendruck auf die Siebfläche bzw. das Filter (7) aufbringt.

13. Gerät insbesondere zum Durchführen des Verfahrens nach mindestens einem der Ansprüche 1, 4, 6 und 7, mit einem Gefäß für das Filtrat und einem auf dieses abnehmbar aufgesetzten, in seiner Unterseite das Filter tragenden Behälter für das Gemisch, dadurch gekennzeichnet, daß der für Mikrowellen mindestens teilweise durchlässige Behälter eine Öffnung zur Umgebung hin aufweist und das Gefäß dichtend abschließt.

14. Behälter nach Anspruch 13, dadurch gekennzeichnet, daß an der Unterseite des Behälters (4) eine zum Hals des Gefäßes (1) passend ausgebildete, flexible Dichtmanschette (13) angeordnet ist.

15. Gefäß nach einem der Ansprüche 8 bis 14, dadurch gekennzeichnet, daß das Gefäß (1) und/oder der Behälter (4) für Mikrowellen teilweise undurchlässig ist.

# Fig.1

# Fig.2